# EUROPEAN PATENT APPLICATION

(11) **EP 1 566 727 A1**
(43) Date of publication of application: **24.08.2005**
(21) Application number: 04003867.1
(22) Date of filing: 20.02.2004
(51) Int. Cl.: G06F 3/023

(54) **Predictive text input system for a mobile communication device**

(71) Applicant: Research In Motion Limited, Ontario N2L 3W8 (CA)
(72) Inventor: Griffin, Jason T., Waterloo, Ontario N2T 2J5 (CA)
(74) Representative: Jones Day

(57) **Abstract**

A predictive text system and method are provided for use with a mobile device having a reduced-key QWERTY keyboard, a display, and an alert mechanism. The system includes an ambiguous word list and a predictive text system software module. The ambiguous word list comprises a plurality of keystroke combinations, each keystroke combination representing a plurality of key selections on the reduced-key QWERTY keyboard, wherein the keystroke combinations present in the ambiguous word list are associated with more than one common predicted word. The predictive text system module receives an input keystroke combination from the reduced-key QWERTY keyboard and determines a predicted word for the input keystroke combination, wherein the predicted word is displayed on the display of the mobile device. If the input keystroke combination is present in the ambiguous word list, then the predictive text system module engages the alert mechanism on the mobile device.

## Description

### BACKGROUND

### 1. TECHNICAL FIELD

This patent application relates generally to predictive text input systems More particularly, the technology described herein provides for a predictive text input system having advanced alerting and grammar checking abilities that is particularly well suited for use with mobile communication devices having reduced-key QWERTY style keyboards.

### 2. DESCRIPTION OF THE RELATED ART

Predictive text systems are known. These systems, which are typically software applications executed in either a stand-alone manner or in conjunction with a text input application such as a word processor, attempt to predict a typed word in response to a plurality of input keystrokes. Word processors, for example, may employ a look-up capability for automatically correcting certain commonly-mistyped words, such as "t", "e", "h", where the user meant to type "the." This is a very basic form of predictive text add-on application. More complex predictive text systems find use in phone applications, in which there is not a one-to-one correspondence between physical keys and letters, but where each key on the text input device (in this case a standard phone keypad) is associated with more than one letter (for example, the letters "a", "b" and "c" are associated with the "2" key).

### SUMMARY

A predictive text system and method are provided for use with a mobile device having a reduced-key QWERTY keyboard, a display, and an alert mechanism. The system includes an ambiguous word list and a predictive text system software module. The ambiguous word list comprises a plurality of keystroke combinations, each keystroke combination representing a plurality of key selections on the reduced-key QWERTY keyboard, wherein the keystroke combinations present in the ambiguous word list are associated with more than one common predicted word. The predictive text system module receives an input keystroke combination from the reduced-key QWERTY keyboard and determines a predicted word for the input keystroke combination, wherein the predicted word is displayed on the display of the mobile device. If the input keystroke combination is present in the ambiguous word list, then the predictive text system module engages the alert mechanism on the mobile device.

### BRIEF DESCRIPTION OF THE DRAWINGS

Figure 1 is a block diagram of an exemplary mobile communication device that may incorporate the predictive text system described herein;
Figure 2 is an expanded block diagram of the mobile communication device shown in Figure 1;
Figure 3 is an exemplary format of the ambiguous word list shown in Figure 2;
Figure 4 is a system flow diagram showing a set of exemplary steps for processing keystrokes in the mobile communication device of Figure 1; and
Figure 5 is an exemplary reduced-key QWERTY keyboard for use with the mobile communication device shown in Figure 1.

### DETAILED DESCRIPTION OF THE DRAWINGS

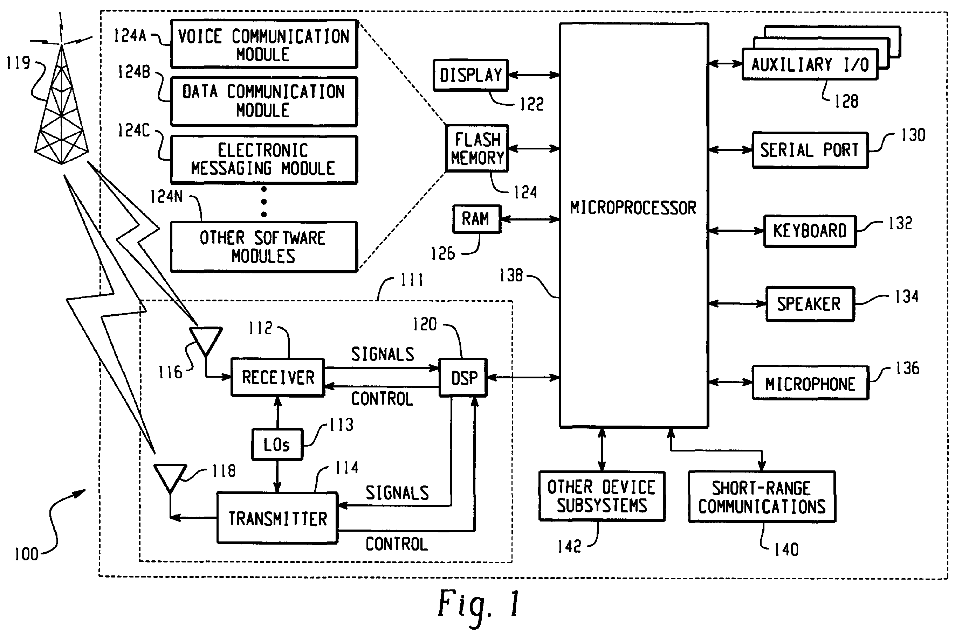

Turning now to the drawing figures, which describe one example of the invention described in this application, Figure 1 is a block diagram of an exemplary mobile communication device that may incorporate the predictive text system described herein. The mobile communication device 100 includes a processing subsystem 138, a communications subsystem 111, a short-range communications subsystem 140, a memory subsystem 124, 126, and various other device subsystems and/or software modules 142. The mobile communication device 100 also includes a user interface, which may include a display 122, a serial port 130, keyboard 132, a speaker 134, a microphone 136, one or more auxiliary input/output devices 128, and/or other user interface devices.

The processing subsystem 138 controls the overall operation of the mobile communication device 100. Operating system software executed by the processing subsystem 138 may be stored in a persistent store, such as a flash memory 124, but may also be stored in other types of memory devices in the memory subsystem, such as a read only memory (ROM) or similar storage element. In addition, system software, specific device applications, or parts thereof, may be temporarily loaded into a volatile store, such as a random access memory (RAM) 126. Communication signals received by the mobile communication device 100 may also be stored to RAM 126.

The processing subsystem 138, in addition to its operating system functions, enables execution of software applications 124 on the device 100. A predetermined set of applications that control basic device operations, such as data and voice communications, may be installed on the device 100 during manufacture. In addition, a personal information manager (PIM) application, including an electronic messaging application, may be installed on the device. The PIM may, for example, be operable to organize and manage data items, such as email, calendar events, voice mails, appointments, and task items. The PIM application may also be operable to send and receive data items via the wireless network 119.

Communication functions, including data and voice communications, are performed through the communication subsystem 111, and possibly through the short-range communications subsystem 140. The communication subsystem 111 includes a receiver 112, a transmitter 114 and one or more antennas 116, 118. In addition, the communication subsystem 111 also includes a processing module, such as a digital signal processor (DSP) 120 or other processing device(s), and local oscillators (LOs) 113. The specific design and implementation of the communication subsystem 111 is dependent upon the communication network in which the mobile communication device 100 is intended to operate. For example, a mobile communication device 100 may include a communication subsystem 111 designed to operate within the Mobitex™ mobile communication system, the DataTAC™ mobile communication system, a GSM network, a GPRS network, a UMTS network, and/or an EDGE network.

Network access requirements vary depending upon the type of communication system. For example, in the Mobitex and DataTAC networks, mobile communication devices are registered on the network using a unique personal identification number or PIN associated with each device. In UMTS and GSM/GPRS networks, however, network access is associated with a subscriber or user of a device. A GPRS device therefore requires a subscriber identity module, commonly referred to as a SIM card, in order to operate on a GSM/GPRS network.

When required network registration or activation procedures have been completed, the mobile communication device 100 may send and receive communication signals over the communication network 119. Signals received by the antenna 116 from the communication network 119 are routed to the receiver 112, which provides signal amplification, frequency down conversion, filtering, channel selection, etc., and may also provide analog to digital conversion. Analog-to-digital conversion of the received signal allows the DSP to perform more complex communication functions, such as demodulation and decoding. In a similar manner, signals to be transmitted to the network 119 are processed (e.g., modulated and encoded) by the DSP 120 and are then provided to the transmitter 114 for digital to analog conversion, frequency up conversion, filtering, amplification and transmission to the communication network 119 (or networks) via the antenna 118.

In addition to processing communication signals, the DSP 120 provides for receiver 112 and transmitter 114 control. For example, gains applied to communication signals in the receiver 112 and transmitter 114 may be adaptively controlled through automatic gain control algorithms implemented in the DSP 120.

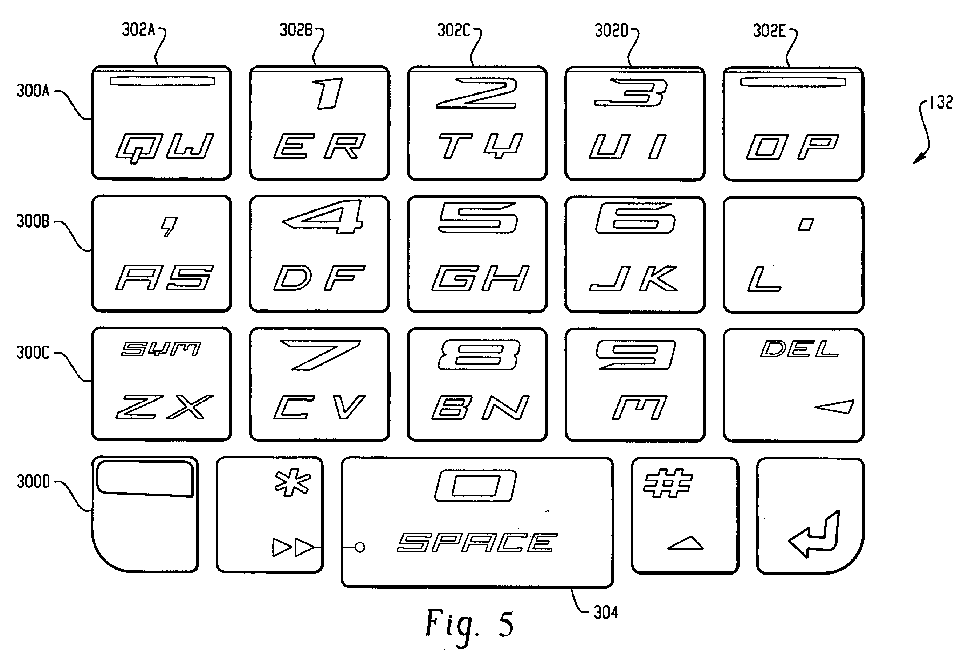

In a data communication mode, a received signal, such as a text message or web page download, is processed by the communication subsystem 111 and input to the processing device 138. The received signal is then further processed by the processing device 138 for output to a display 122, or alternatively to some other auxiliary I/O device 128. A device user may also compose data items, such as email messages, using a keyboard 138 and/or some other auxiliary I/O device 128, such as a touchpad, a rocker switch, a thumb-wheel, or some other type of input device. The composed data items may then be transmitted over the communication network 119 via the communication subsystem 111. The keyboard 138 may be a reduced-key QWERTY keyboard, such as shown in Figure 5 below, in which there are fewer than 26 physical keys for receiving input selections for each of the 26 letters of the English alphabet.

In a voice communication mode, overall operation of the device is substantially similar to the data communication mode, except that received signals are output to a speaker 134, and signals for transmission are generated by a microphone 136. Alternative voice or audio I/O subsystems, such as a voice message recording subsystem, may also be implemented on the device 100. In addition, the display 122 may also be utilized in voice communication mode, for example to display the identity of a calling party, the duration of a voice call, or other voice call related information.

The short-range communications subsystem 140 enables communication between the mobile communication device 100 and other proximate systems or devices, which need not necessarily be similar devices. For example, the short-range communications subsystem 140 may include an infrared device and associated circuits and components, or a Bluetooth™ communication module to provide for communication with similarly-enabled systems and devices.

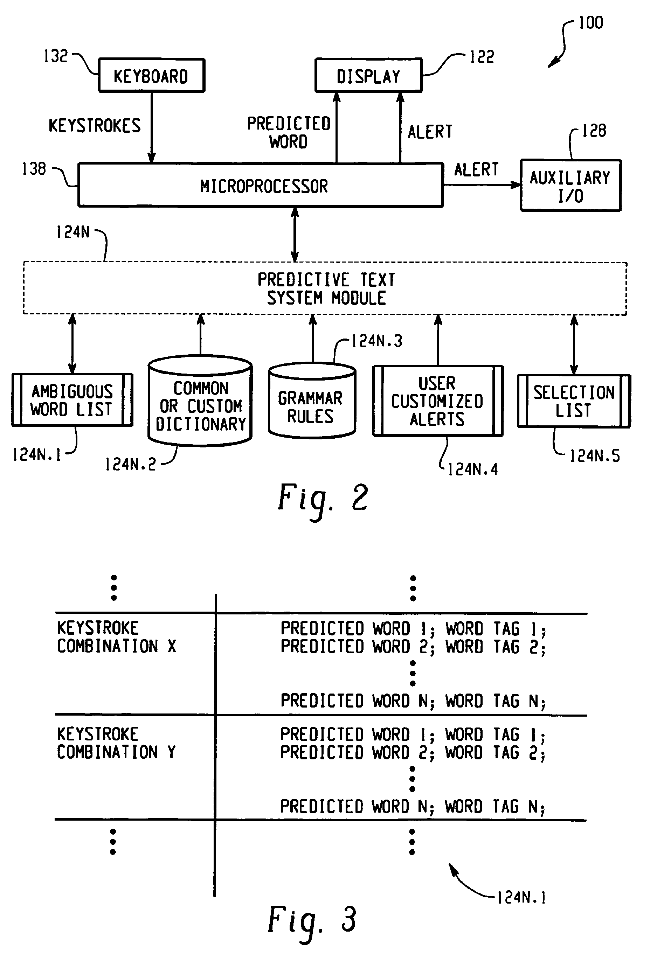

Figure 2 is an expanded block diagram of the mobile communication device shown in Figure 1. This figure sets forth various components of a predictive text software system, including a core predictive text system module 124N, which is a software application that is stored in memory 124 and executed by the microprocessor 138, and several data stores, including an ambiguous word list 124N.1, a common or custom dictionary database 124N.2, a grammar rules database 124N.3, data specifying one or more user-customized alerts 124N.4, and a word selection list 124N.5 In addition to these software and data components, the predictive text system may include a keyboard 132, such as a reduced-key QWERTY keyboard, which provides keystroke selection signals to the microprocessor 138, a display 122, and one or more auxiliary I/O devices 128 for providing an alert indication to the user of the mobile device.

Prior to describing the predictive text system components in further detail, it is instructive to consider an exemplary reduced-key QWERTY keyboard that may be utilised in conjunction with this system, as shown in Figure 5. The keyboard 132 set forth in Figure 5 utilizes five columns 302A-302E and four rows 300A-300D to represent a reduced column QWERTY keyboard with an overlaid touch tone phone key arrangement 42. The four rows 3001-300D include a first row 300A, a second row 300B, a third row 300C, and a fourth row 300D. The five columns include a first column 302A, a second column 302B, a third column 302C, a fourth column 302D, and a fifth column 302E. Figure 5 shows the touch tone phone key arrangement (numerals 1-9 and 0) as being centered between the columns. The first row 300A of keys includes in order the following key combinations for the text entry and telephony mode: "QW", "ER/1", "TY/2", "UI/3", and "OP". The second row 300B includes the following key combinations in order: "AS/,", "DF/4", "GH/5", "JK/6", and "L/.". The third row 300C includes the following key combinations in order: "ZX/sym", "CV/7", "BN/8", "M/9" and "backspace/delete." The "sym" function key pulls up a list of symbols that the user may input. The fourth row 300D includes the following key combinations in order: "alt", "next/*", "space/0", "shift/#", and "return (enter)". The keys in the top three rows 300A-300C are of uniform size while the keys in the fourth row 300D have a size that is different from the keys in the top three rows. In particular, the center "space" key 304 is larger than the other four keys in the row, with the other four keys having a similar size. The outermost keys in the fourth row 300D also have a more rounded shape, for aesthetic and other reasons. Each of the rows is straight and each of the columns is straight, with the keys in the fourth row 300D being mis-aligned with the five columns due to their different sizes.

In this reduced-key QWERTY keyboard 132, only two of the letter keys, the "L" and "M" letters are associated with a single physical key, the remaining letters are paired together and associated with a key. Each physical key generates a single keystroke signal. Thus, if a user presses the "GH/5" key, although a single keystroke signal is generated, the predictive text system must determine if the user meant to type the "G" or the "H" key.

The predictive text system module 124N is the core software application which performs an analysis of keystrokes received from the keyboard 132 and provides predicted words in response thereto for display 122 by the microprocessor 138. This core module 124N also provides alerting data to the microprocessor based on a determination that the predicted word may be at or above a particular threshold of ambiguity. If the predicted word is determined to be ambiguous, then this alerting data causes the microprocessor to engage one or more alerts to notify the user that he/she should examine the display to determine if the displayed predicted word is the word that the user intended to type. The alerting data is provided by the user customised alerts store 124N.4, which is a file or record that describes the type of alert that should be executed by the microprocessor when an ambiguous word is predicted by the system. Types of alerts may include an audible beep or tone, a vibration if the device is equipped with a vibration motor, a change in the display colour of the predicted word, a change in the background of the entire display (or parts thereof), or any other audible, visible or tactile sensation which draws the user's attention to the display 122.

The ambiguous word list 124N.1 may be implemented as a simple table, as shown in Figure 3. In a first column of the table 124N.1, the ambiguous word list sets forth a plurality of keystroke combinations that are each associated with more than one possible predicted word. The second column of the ambiguous word list 124N.1 sets forth each of the possible predicted words, preferably organised by frequency of occurrence in the English language, along with a word tag indicating the most likely part of speech for the word, such as noun, verb, adjective, etc. Thus, for example, for the keystroke combination X, there may be N possible predicted words, where predicted word 1 occurs more frequently in the English language than predicted word 2, and predicted word 2 occurs more frequency than predicted word 3, etc.

In addition to the ambiguous word list 124N.1, the system includes other data sources for use in determining the predicted word to provide to the microprocessor 138, including the common dictionary database 124N.2, the grammar rules database 124N.3, and the selection list 124N.5 The common dictionary database 124N.2 provides a standard dictionary that maps keystroke combinations to predicted words. If a particular keystroke combination maps into a single predicted word, then this word is determined to be the predicted word. However, if the keystroke combination maps into more than one word, then the grammar rules database 124N.3 may be utilised by the predictive text system module 124N to determine which of the predicted words in the dictionary database 124N.2 is the most likely word by analysing the part of speech of each predicted word in the context of the sentence being typed. In addition (or in conjunction with) the common dictionary 124N.2, the system may also utilise a custom dictionary of words that are not commonly found in the English language, such as proper names, scientific terms, etc. The selection list 124N.5 is similar in structure to the ambiguous word list 124N.1 in that it maps keystroke combinations into possible word choices. However, the selection list 124N.5 is much larger than the ambiguous word list, and typically includes many possible alternatives for each keystroke combination, and also includes many keystroke combinations that do not result in a high level or ambiguity. In addition, the selection list may include probable letter sequences instead of English words, such as acronyms, custom words for a particular field or user, etc., which would not appear in either the dictionary database 124N.2 or the ambiguous word list. The selection list 124N.5 is consulted by the system software 124N after the predicted word is determined in order to provide alternative selections to the display in the event that the predicted word is in fact not the word that the user meant to type.

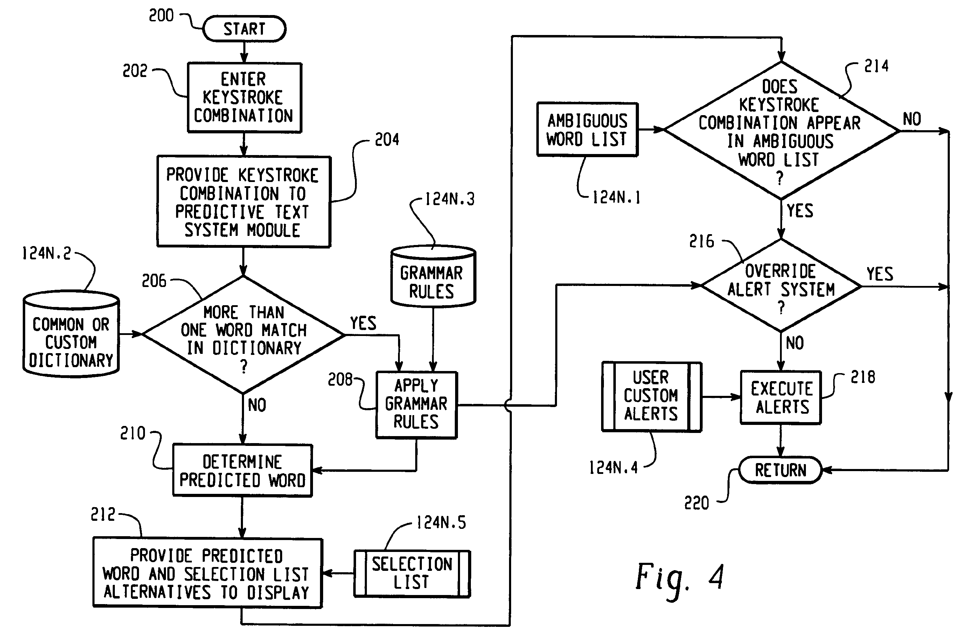

Figure 4 is a system flow diagram showing a set of exemplary steps for processing keystrokes in the mobile communication device of Figure 1. The method starts at 200. In step 202, a user of the mobile device enters a keystroke combination followed by either the space bar or some ending punctuation, such as a period, comma, etc., which triggers the system to process the entered word. The keystroke combination is then passed to the predictive text system module 124N in step 204 for processing.

In step 206, the system queries the dictionary 124N.2 to determine whether there is more than one word match for the particular keystroke combination typed by the user. If there is only one word match, then control passes to step 210. If, however, there is more than one possible match in the dictionary 124N.2, then at step 208 the system may apply grammar rules to the sentence being typed using the grammar rules database 124N.3 to make a proper selection from the plurality of possible word matches. At step 210, the system determines the predicted word based on steps 206 and 208, and at step 212 the predicted word and any alternatives to that word found on the selection list are provided to the display 122. Preferably, only the predicted word is actually displayed, but the user may access the selection list alternatives 124N.5 by engaging a particular key combination or by engaging one of the auxiliary I/O devices 128.

The predictive text system module 124N compares the input keystroke combination to the ambiguous word list 124N.1 in step 214 to determine whether the keystroke combination has been associated with several common words. The determination of whether any particular keystroke combination is associated with several common English words is preferably determined prior to the device being utilised. This determination is made based upon the particular layout of the keyboard, and also based on a design choice as to the level of ambiguity that the device designer is willing to accept. For example, there may be some keystroke combinations that lead to several common English words, but the frequency of occurrence of one of those words is so much higher than the other possible words that the designer does not add that particular combination to the ambiguous word list 124N.1. Preferably, the ambiguous word list 124N.1 is designed so that the keystroke combinations that are present reflect only those combinations which result in several possible predicted words, each of which frequently occurs in the English language. The trade-off made by the designer in populating the ambiguous word list 124N.1 balances system accuracy versus use-ability. On the one hand, putting more keystroke combinations on the ambiguous word list 124N.1 will result in a more accurate system, but on the other hand the user will be interrupted more often in order to determine whether the predicted word is in fact the word that the user intended to type.

If the entered keystroke combination is not present in the ambiguous word list 124N.1, then control passes to step 220, and the alert system is bypassed. If, however, the keystroke combination is present in the ambiguous word list 124N.1, then control passes to step 216, where the system software 124N may override the alert system based on information obtained from applying the grammar rules 124N.3 to the predicted words from step 208. In order to perform this part of step 208, the system accesses the grammar rules database 124N.3 and uses the grammatical constructs set forth therein to determine the part of speech of the word being typed. For example, after processing the currently typed sentence, the system 124N may determine that the current keystroke combination is a noun. Subsequently, in step 216, the word tags set forth in the second column of the ambiguous word list 124N.1 may be examined to determine if the displayed predicted word from step 210 is a noun. If so, then the alert system may be bypassed to step 220 if the system software determines that even though there is a possibility of ambiguity, it is over-ridden by the fact that the determined predicted word has the correct part of speech associated with it. Moreover, the system may take into account the word tags of the other possible predicted words from the ambiguous word list 124N.1 in making the determination in step 216 as to whether the alert system should be bypassed.

If the system determines not to override the alert system at step 216, then control passes to step 218, which causes the microprocessor to execute the one or more user customised alerts 124N.4. As noted previously, the alerts may be selected and/or customised by the user of the device, and may include any combination of audible, visible or tactile alerting mechanisms. In response to the alert, and as part of step 218, the device user may accept the displayed predicted word provided by the system by preferably doing nothing and simply moving on to typing the next word. Alternatively, the user may decide that the displayed predicted word provided by the system is not the word that the user meant to type. In this case, the user may click or select a data selection device, such as a thumbwheel, mouse or other type of selector, in order to manually pick another word from the selection list 124N.5. In response to activation of the data selection device, the system software 124N would access the selection list 124N.5 and retrieve some or all of the other possible words (or letter combinations) for the current keystroke combination. These other words may then be displayed to the user, preferably in the form of a list, and the user may then use the data selection device to manually select the proper word. The process ends at 220 and repeats for the next input keystroke combination.

The above-described embodiments of the invention are intended to be examples only. Those of skill in the art may effect alterations, modifications and variations to the particular embodiments without departing from the scope of the invention.

## Claims

1. A predictive text system for use with a mobile device having a reduced-key QWERTY keyboard, a display, and an alert mechanism, comprising:
an ambiguous word list comprising a plurality of keystroke combinations, each keystroke combination representing a plurality of key selections on the reduced-key QWERTY keyboard, wherein the keystroke combinations present in the ambiguous word list are associated with more than one common predicted word; and
a predictive text system module for receiving an input keystroke combination from the reduced-key QWERTY keyboard and for determining a predicted word for the input keystroke combination, wherein the predicted word is displayed on the display of the mobile device;
wherein the predictive text system module engages the alert mechanism on the mobile device if the input keystroke combination is present in the ambiguous word list.

2. The predictive text system of claim 1, further comprising:
a dictionary database;
wherein the predictive text system determines the predicted word by matching the input keystroke combination with one or more predicted words stored in the dictionary database.

3. The predictive text system of claim 2, further comprising:
a grammar rules database;
wherein if the predictive text system determines that there is more than one predicted word associated with the keystroke combination, it determines the predicted word by applying a set of grammar rules from the grammar rules database to the input keystroke combination.

4. The predictive text system of claim 1, further comprising:
an alerts store for storing data that causes the mobile device to engage the alert mechanism.

5. The predictive text system of claim 1, wherein the alert mechanism is a change in the colour of the predicted word on the display.

6. The predictive text system of claim 1, wherein the alert mechanism is an audible tone.

7. The predictive text system of claim 1, wherein the alert mechanism is a vibration device.

8. The predictive text system of claim 1, wherein the predicted words for each keystroke combination are organised in the ambiguous word list by frequency of occurrence in the language of the predicted words.

9. The predictive text system of claim 8, wherein the language is English.

10. The predictive text system of claim 1, further comprising:
a dictionary database containing one or more predicted words associated with a plurality of keystroke combinations; and
a grammar rules database containing a plurality of grammatical constructs that describe proper grammar in a particular language; and
wherein the predictive text system module accesses the grammar rules database to determine the most probable part of speech of the input keystroke combination, and then uses this determination to select one of the predicted words from the dictionary database.

11. The predictive text system of claim 10, wherein the dictionary database provides a word tag for each predicted word, the word tag indicating the part of speech of the predicted word.

12. The predictive text system of claim 11, wherein the predictive text system module compares the determination of the most probable part of speech to the word tags in the ambiguous word list in order to select one of the predicted words from the dictionary database.

13. The predictive text system of claim 1, further comprising:
a selection list comprising a plurality of alternative predicted words for each of a plurality of keystroke combinations; and
a data selection device for selecting information displayed on the mobile device;
wherein in response to a user activating the data selection device, the predictive text system module retrieves the alternative predicted words associated with the input keystroke combination and displays the alternative predicted words on the display.

14. The predictive text system of claim 13, wherein the data selection device is utilised by the user to select one of the alternative predicted words set forth on the display.

15. The predictive text system of claim 1, wherein the ambiguous word list is modifiable by a user of the mobile device.

16. The predictive text system of claim 13, wherein the selection list is modifiable by a user of the mobile device.

17. The predictive text system of claim 1, further comprising:
a grammar rules database;
wherein the predictive text system applies one or more grammatical rules from the grammar rules database to the input keystroke combination and disables the alert mechanism on the mobile device.

18. A mobile device, comprising:
a reduced-key QWERTY keyboard;
a display;
an alert mechanism;
an ambiguous word list comprising a plurality of keystroke combinations, each keystroke combination representing a plurality of key selections on the reduced-key QWERTY keyboard, wherein the keystroke combinations present in the ambiguous word list are associated with more than one common predicted word; and
a predictive text system module for receiving an input keystroke combination from the reduced-key QWERTY keyboard and for determining a predicted word for the input keystroke combination, wherein the predicted word is displayed on the display of the mobile device;
wherein the predictive text system module engages the alert mechanism on the mobile device if the input keystroke combination is present in the ambiguous word list.

19. The mobile device of claim 18, further comprising:
a dictionary database;
wherein the predictive text system determines the predicted word by matching the input keystroke combination with one or more predicted words stored in the dictionary database.

20. The mobile device of claim 19, further comprising:
a grammar rules database;
wherein if the predictive text system determines that there is more than one predicted word associated with the keystroke combination, it determines the predicted word by applying a set of grammar rules from the grammar rules database to the input keystroke combination.

21. The mobile device of claim 18, further comprising:
an alerts store for storing data that causes the mobile device to engage the alert mechanism.

22. The mobile device of claim 18, wherein the alert mechanism is a change in the colour of the predicted word on the display.

23. The mobile device of claim 18, wherein the alert mechanism is an audible tone.

24. The mobile device of claim 18, wherein the alert mechanism is a vibration device.

25. The mobile device of claim 18, wherein the predicted words for each keystroke combination are organised in the ambiguous word list by frequency of occurrence in the language of the predicted words.

26. The mobile device of claim 18, further comprising:
a dictionary database containing one or more predicted words associated with a plurality of keystroke combinations; and
a grammar rules database containing a plurality of grammatical constructs that describe proper grammar in a particular language; and
wherein the predictive text system module accesses the grammar rules database to determine the most probable part of speech of the input keystroke combination, and then uses this determination to select one of the predicted words from the dictionary database.

27. The mobile device of claim 26, wherein the dictionary database provides a word tag for each predicted word, the word tag indicating the part of speech of the predicted word.

28. The mobile device of claim 27, wherein the predictive text system module compares the determination of the most probable part of speech to the word tags in the ambiguous word list in order to select one of the predicted words from the dictionary database.

29. The mobile device of claim 18, further comprising:
a selection list comprising a plurality of alternative predicted words for each of a plurality of keystroke combinations; and
a data selection device for selecting information displayed on the mobile device;
wherein in response to a user activating the data selection device, the predictive text system module retrieves the alternative predicted words associated with the input keystroke combination and displays the alternative predicted words on the display.

30. The mobile device of claim 29, wherein the data selection device is utilised by the user to select one of the alternative predicted words set forth on the display.

31. The mobile device of claim 18, further comprising:
a grammar rules database;
wherein the predictive text system applies one or more grammatical rules from the grammar rules database to the input keystroke combination and disables the alert mechanism on the mobile device.
